# EUROPÄISCHE PATENTANMELDUNG

(11) **EP 2 689 657 A1**
(43) Veröffentlichungstag der Anmeldung: **29.01.2014**
(21) Anmeldenummer: 13003711.2
(22) Anmeldetag: 24.07.2013
(51) Int. Cl.: A01G 9/02, C05F 17/02

(54) **Kompostschacht zum Einsatz in ein Hochbeet sowie Hochbeet**

(30) Priorität: 26.07.2012 DE 102012014758
(71) Anmelder: Sybille Maag, 86983 Lechbruck (DE)
(72) Erfinder: Maag, Sybille, 86983 Lechbruck (DE); Maag, Michael, 86983 Lechbruck (DE)
(74) Vertreter: Reuther, Martin

(57) **Zusammenfassung**

Ein Hochbeet mit seitlichen Öffnungen wird autark betrieben.

## Beschreibung

Die Erfindung betrifft ein Hochbeet sowie einen Schacht zum Einsatz in ein Hochbeet.

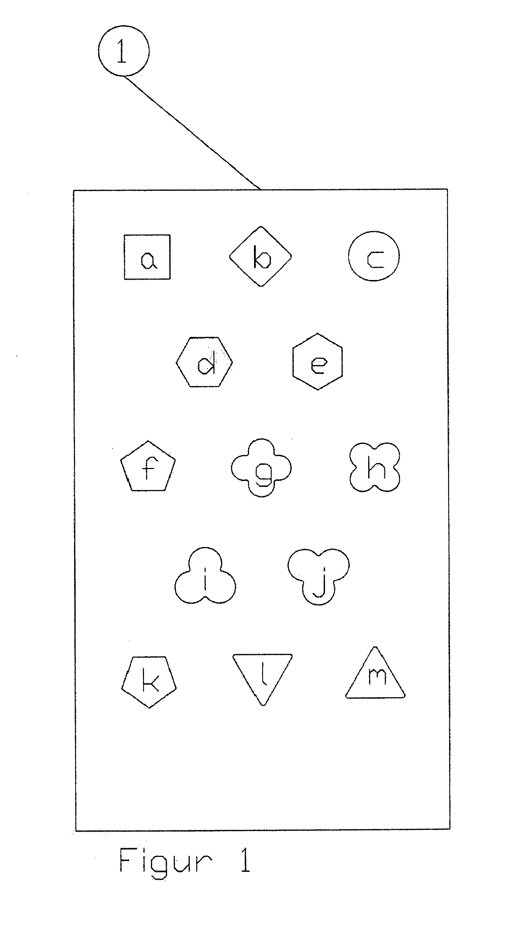

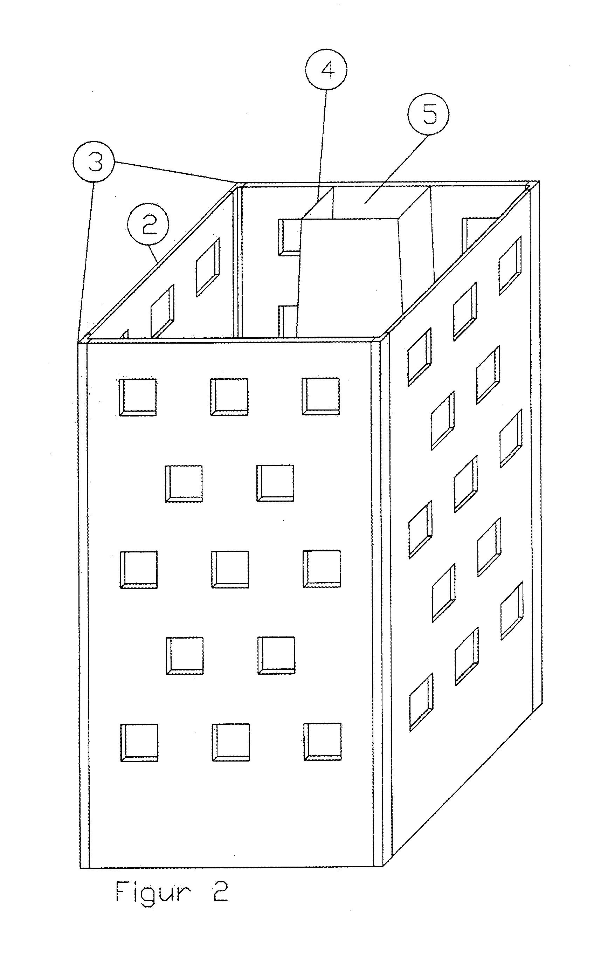

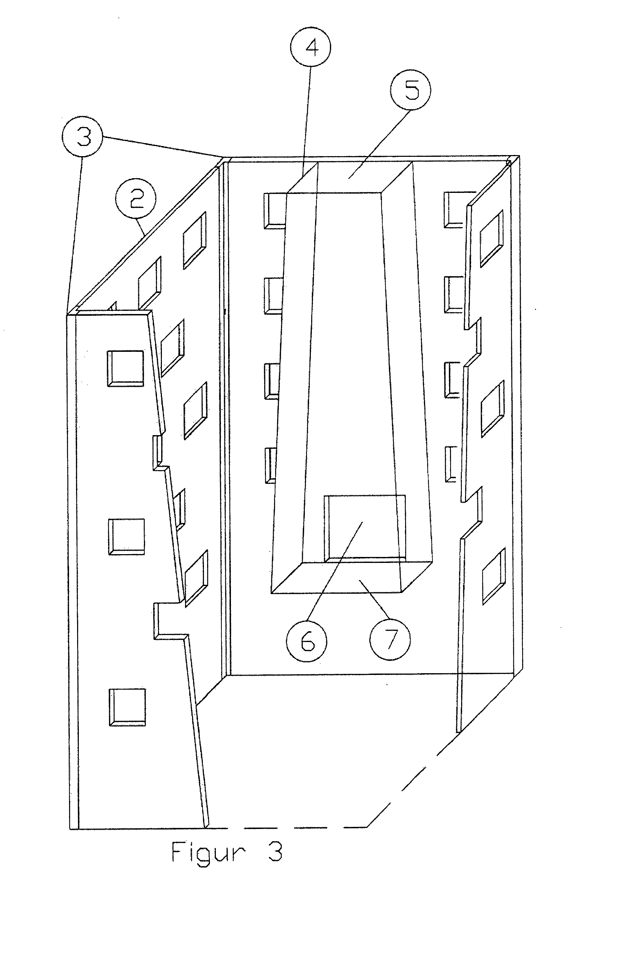

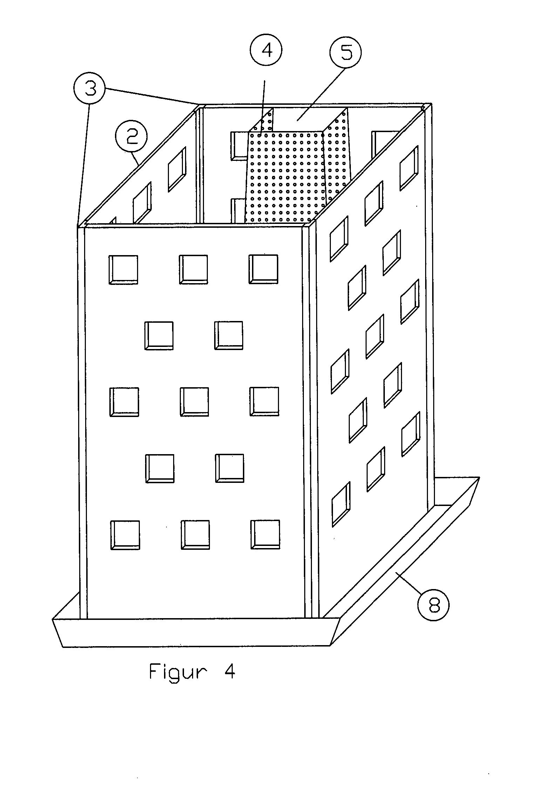

Übliche Hochbeete unterscheiden sich von Beeten und Hügelbeeten auf Bodenniveau dadurch, dass die Pflanzfläche durch eine geeignete Vorrichtung höher gelegt ist. Diese Niveauanhebung bietet den Vorteil, dass die Bearbeitung der zu bepflanzenden Fläche in einer angenehmen Arbeitshöhe erfolgt. Weiter ist eine Unabhängigkeit vom vorhandenen Untergrund und vom Erdboden vorhanden, da die Hochbeete mit unterschiedlichem Material gefüllt werden können. Die durch die Seitenflächen des Hochbeetes erhöhte Oberfläche führt auch zu einer schnelleren, das Wachstum fördernde Erwärmung durch die Sonneneinstrahlung. Ein entsprechendes Hochbeet ist beispielsweise in Figur 5 der AT 398 072 B offenbart, und dieses im Zusammenspiel mit einem Komposter, wobei diese Druckschrift und auch beispielsweise die DE 298 01 059 U1 oder die DE 83 12 429 U1 jeweils Komposter offenbaren.

Bisherige konventionelle Hochbeete haben allerdings auch Nachteile. So besteht keinerlei Flächengewinn der bebaubaren Fläche gegenüber einem konventionellen Beet auf Bodenniveau. Außerdem ist, bei einer üblichen Füllung des Hochbeetes, die ähnlich einem Hügelbeet aus zuunterst groben, sich allmählich zersetzenden Material besteht, nach Zersetzung desselben, eine regelmäßige künstlich hinzuzufügende Düngung oder ein kompletter, regelmäßig im Abstand von einigen Jahren sich wiederholender, Austausch der Füllung mit Wiederabbau und erneutem Aufbau des Hochbeetes notwendig, um die Fruchtbarkeit des Hochbeetes zu erhalten. Auch ist keine Unterscheidung in verschiedenen Wärmezonen möglich, da konventionelle Hochbeete lediglich eine einzige waagrechte Anbaufläche besitzen.

Insbesondere die DE 83 12 429 U1 und die WO 2011/080760 A2 offenbaren einen Komposter, bei welchem durch seitlich angehängte Konsolen, in denen Nutz. oder Zierpflanzen wachsen können, einen etwaigen Unkrautbewuchs an seitlichen Öffnungen des Komposters zurückzudrängen und den sich bildenden Kompost unmittelbar zum Pflanzenanbau zu nutzen. Auch sind aus der US 4,268,994 Pflanzsystem, die eine seitliche Bepflanzung ermöglichen, bekannt.

Sowohl die DE 83 12 429 U1 als auch die DE 74 05 775 U und die DE 298 01 059 U1 offenbaren hierbei Anordnungen, die auf den Boden stehend und nach unten offen ausgebildet sind, wie dieses bei herkömmlichen Kompostiereinrichtungen und Frühbeeten hinlänglich bekannt ist.

Es ist Aufgabe vorliegender Erfindung, ein Hochbeet sowie einen Schacht zum Einsatz in ein Hochbeet bereitzustellen, die einen wesentlich effektiveren Einsatz eines Hochbeets gewährleisten.

Als Lösung werden ein Hochbeet sowie ein Schacht zum Einsatz in ein Hochbeet mit den Merkmalen der unabhängigen Ansprüche vorgeschlagen. Weitere vorteilhafte Ausgestaltungen finden sich in den Unteransprüchen und der nachfolgenden Beschreibung. hierbei geht die Erfindung von der Grunderkenntnis aus, dass bei einem Hochbeet mit seitlichen Öffnungen die Effektivität dadurch erheblich gesteigert werden kann, wenn das Hochbeet autark betrieben wird.

So ermöglichen ein oder mehrere Kompostschächte, eine mittels Rollen bewegliche Grundplatte bzw. ein mittels Rollen beweglicher Rahmen sowie eine wasserdichte Wanne einzeln oder in beliebiger Kombination ein autarkes Hochbeet, bei welchem durch den Kompostschacht, insbesondere wenn dieser über Öffnung unmittelbar mit dem Inneren des Hochbeets in Kontakt steht, Wärme, Gase und Mikroorganismen nicht nur Pflanzen im oberen Bereich des Hochbeets sondern auch an den Seiten zur Verfügung stehen, durch die Rollen das Hochbeet individuell nach Wachstumssituationen insbesondere für die Pflanzen an der Seite ausgerichtet werden kann und/oder die Wanne eine Wasserversorgung insbesondere auch unabhängig von einem Untergrund gewährleistet. Hierdurch wird das Hochbeet vorzugsweise autark.

Das erfindungsgemäße Hochbeet besteht vorzugsweise aus einem Behälter und einem oder mehreren im Behälter integriertem Schächten (4) zur Aufnahme von pflanzlichen Küchen- und/oder Gartenabfällen (Kompostschächten). Der Behälter steht vorzugsweise im Freien und kann verschiedene Formen und Farben aufweisen. Denkbar sind unter anderem aufrechtstehende allgemeine Zylinder mit kreisförmiger, elliptischer oder polyedrischer Grundfläche.

Die Höhe ist grundsätzlich beliebig, vorzugsweise zwischen 60cm und 120cm, um ein bequemes Arbeiten des Nutzers zu gewährleisten, der Durchmesser ist ebenfalls grundsätzlich beliebig, vorzugsweise zwischen 30cm und 80cm.

Die Seitenwände (Mantelfläche) bestehen vorzugsweise aus verrottungsfesten Platten (2), wie z.B. Aluminiumverbundplatten. Diese Wandbildner werden durch geeignete Verbindungssysteme verbunden, wie z.B. Einschub-Profilwinkel (3).

Durch Auswahl einer dunklen Oberflächenfarbe der Mantelfläche kann die Erwärmung des Hochbeetes durch Sonneneinstrahlung erhöht werden, durch Wahl einer hellen oder reflektierenden Oberfläche verringert, um das Hochbeet an unterschiedliche Standortbedingungen und Bepflanzungen optimal anzupassen.

Ein Boden kann zum Schutz empfindlicher Oberflächen am Aufstellungsort eingelegt werden.

Das Hochbeet ist nach oben offen, um bei einer Aufstellung ohne Überdachung Regenwasser direkt aufnehmen zu können.

Erfindungsgemäß weisen die Seitenwände Öffnungen (1a-1m) auf. Der Behälter wird mit Erde gefüllt und in die Öffnungen der Seitenwände können Pflanzen oder Samen eingesetzt werden. Die Größe, Form, Abstand und Lage dieser Öffnungen richten sich nach Art der Bepflanzung mit Samen oder mit vorgezogenen Pflanzen sowie nach der Auswahl der einzusetzenden Pflanze. Die Form dieser Öffnungen ist grundsätzlich beliebig (la bis 1m), eine Rautenform hat sich im Versuchsanbau bewährt. Die Größe der Öffnungen ist grundsätzlich beliebig, ein Durchmesser von ca. 5cm hat sich bewährt, um einerseits ein unnötiges Herausfallen der Erdfüllung zu minimieren und andererseits das Einsetzen handelsüblicher, vorgezogener Pflanzen in Pflanzballen zu ermöglichen. Der Abstand und die Anordnung der Öffnungen sind grundsätzlich beliebig, im Versuchsanbau hat sich ein versetztes Muster im Abstand von 20-25cm bewährt.

Die Öffnungen zur Bepflanzung beginnen erst mit etwas Abstand zum Boden. Daher liegen Pflanzen, die aus den untersten Öffnungen herauswachsen, nicht auf den Boden auf. Gleichzeitig wird bei Aufstellung des Hochbeetes in einem Wasserbecken als Schneckenbarriere verhindert, dass Schnecken den Boden berührende Blätter als Brücke zum Hochbeet nutzen.

Durch diese seitliche Bepflanzung gewinnt das Hochbeet zusätzliche Anbaufläche. Je kleiner der Grundfläche des Hochbeetes im Vergleich zur Höhe ist, umso größer ist dabei der anteilige Flächengewinn.

Bis auf Wurzelgemüse ist eine Bepflanzung der Seiten mit allen üblicherweise verwendeten Gemüsesorten, Kräutern und Blumen möglich. Durch die unterschiedliche Ausrichtung der Seitenwände, kann die Bepflanzung auch unterschiedlich in Bezug auf die zu erwartenden Temperaturen sein. So kann die Sonnenseite mit wärmeliebenden Pflanzen, und die Schattenseite mit eher wärmeempfindlichen Pflanzen bestückt werden. Die Erwärmung des Hochbeetes durch die Sonne kann auch über eine gezielte Auswahl der Oberflächenfarbe gesteuert werden. Ein Beispiel dafür ist Kopfsalat, der bei zu hohen Tagestemperaturen zum sogenannten "Schießen" durch vorzeitige Blütenbildung neigt. Dieser Effekt ist bei Einsatz auf der Schattenseite verringert.

Weiterhin weist das Hochbeet einen oder mehrere integrierte Kompostschächte(4) auf. Diese Kompostschächte bestehen aus unverrottbarem Material und weisen Öffnungen auf.

Diese Öffnungen ermöglichen bei geeigneter Ausgestaltung einen Austausch von Nährstoffen und Wasser zwischen Hochbeet und Kompostschacht. Die Form und Größe dieser Öffnungen sind grundsätzlich beliebig, vorzugsweise groß genug, dass der Übergang von Kompostwürmern vom Kompostschacht zum Substrat im Hochbeet nicht verhindert wird, und klein genug dass kein Substrat aus dem Hochbeet in den leeren Schacht hineinfällt. Ein Maß der Öffnungen zwischen 4mm und 25mm hat sich im Versuchsanbau bewährt. Eine Ausführung des Schachtes sowohl mit Lochblech als auch mit einem Metallgitter hat sich im Versuchsanbau bewährt.

Die Form des Kompostschachtes (4) ist beliebig, vorzugsweise rechteckig. Der Kompostschacht kann zum Schutz vor Schädlingen mit einem Deckel über der Einwurföffnung(5) abgedeckt werden.

Ein Kompostschacht erstreckt sich von der Oberfläche des Hochbeetes bis auf eine möglichst niedrige Höhe, die jedoch den Einbau von einem oder mehreren Wasserreservoirs in das Hochbeet nicht behindert.

Die Lagen der Kompostschächte innerhalb des Hochbeetes sind grundsätzlich beliebig, vorzugsweise an der Seite. Eine Lage komplett innerhalb des Hochbeetes ist möglich, dies bietet den Vorteil dass keine Seitenfläche für das Einsetzen von Pflanzen durch den Kompostschacht blockiert wird, hat allerdings den Nachteil eines aufwändigeren horizontalen Entnahmeschachtes.

Das Verhältnis der Grundfläche des Kompostschachtes zur Grundfläche des Hochbeetes ist grundsätzlich beliebig, im Versuchsanbau bewährt hat sich ein Verhältnis zwischen 1:8 bis 1:15.

Wird die Grundfläche des Hochbeetes vergrößert, kann wahlweise die Grundfläche der Kompostschächte oder die Anzahl der Kompostschächte entsprechend erhöht werden.

Durch eine seitliche, gegen Schädlinge verschließbare Entnahmeöffnung(6) kann fertiger Kompost entnommen werden, der Rohkompost kann durch die sich nach unten hin im Querschnitt vergrößernde Form des Kompostschachtes von der Einwurföffnung(5) zu dessen unterem Schachtende(7) leichter nachrutschen.

Die Kompostschächte erfüllen vorzugsweise mehrere Funktionen:
a. Kreislaufwirtschaft durch Verrottung von z.B. Küchenabfällen und oder Gartenabfällen. Die bei Ernte und Verarbeitung der im Hochbeet angebauten Pflanzen zwangsläufig anfallenden nicht verwertbaren Pflanzenteile können direkt wieder zur Erzeugung von Erde und Nährstoffen in das Beet zurückgegeben werden, auf dem diese gewachsen sind.
b. Das Kompostsystem versorgt dadurch das Hochbeet mit zusätzlichen Nährstoffen. Ein Austausch der Füllung des Hochbeetes ist gegenüber konventionellen Hochbeeten in größeren zeitlichen Abständen oder gar nicht mehr nötig.

Die Funktion des Kompostschachtes kann durch den Besatz mit Kompostwürmern erheblich gesteigert werden. Die Kompostwürmer können durch die Gitter- oder gelochte Struktur des Schachtes jederzeit vom Kompost in die Füllung des Hochbeetes und zurück wechseln. Durch die Grabearbeit der Kompostwürmer wird neben der Verteilung der Nährstoffe der Boden im Hochbeet gelockert. Ohne diese Tätigkeit der Kompostwürmer würde die Erde im unteren Anbaubereich stärker verdichten und letztendlich unfruchtbarer werden. Dadurch kann das erfindungsgemäße Hochbeet auch höher als konventionelle Hochbeete ausgeführt werden.

Das Hochbeet kann mit einem eingelegten Boden auf Balkonen oder Terrassen aufgestellt werden. Bei Aufstellung auf Decken oder Balkonen muss jedoch aufgrund des hohen Gewichtes des Hochbeetes die ausreichende Tragfähigkeit der Aufstellflächen gesichert sein. Bei Aufstellung im Freien auf Mutterboden kann ein Gittermaterial als Schutz gegen Nagetiere unterlegt werden.

Das Hochbeet kann durch eine geeignete Vorrichtung mobil gestaltet werden, und zum Beispiel auf einen Rahmen oder eine Grundplatte mit Schwerlast-Rollensatz montiert werden. Dadurch ist das Hochbeet ortsvariabel. Es kann ohne großen Aufwand z.B. von einem Schattenplatz zu einem Sonnenplatz geschoben, oder zur Reinigung des Aufstellplatzes verschoben werden.

Das Hochbeet kann mit einem innenliegenden Wasserreservoir im unteren Bereich ausgestattet werden, um die Gießintervalle zu verlängern.

Das Hochbeet kann in ein flaches Wasserbecken (8) gestellt werden. Die Maße und Form des Beckens sind grundsätzlich beliebig, vorzugsweise so zu wählen, dass einerseits die Mitte des Beetes bequem erreicht werden kann, anderseits der Wasserrand um das Beet möglichst breit wird. Durch die größere Grundfläche des Wasserbeckens (8) wird bei Aufstellung ohne Überdachung mehr Regenwasser aufgefangen, als auf die Grundfläche des Hochbeetes selbst regnen würde. Dadurch ist ein Gießen des Hochbeetes mit dieser Aufstellungsvariante nur in regenarmen Zeiten oder Gebieten nötig, in denen die Verdunstung den Niederschlag übersteigt.

Durch die Ausstellung innerhalb eines Wasserbeckens (8) können Schnecken das Hochbeet nur erschwert erreichen.

In die Eckprofile des Hochbeetes(3) können Gitterelemente gesteckt werden, die als Rankhilfe für rankende Pflanzen wie z.B. Bohnen dienen.

### Bezugszeichenliste

- 1a - 1m: seitliche Öffnungen, verschiedene Ausführungen
- 2: Seitenwand
- 3: Eckprofil
- 4: Schacht zur Kompostaufnahme
- 5: Einwurföffnung
- 6: Entnahmeöffnung
- 7: unteres Schachtende
- 8: Wasserbecken

## Patentansprüche

1. Schacht zum Einsatz in ein Hochbeet, **dadurch gekennzeichnet, dass** dieser Schacht gelochte oder gitterförmige Wände aufweist, senkrecht verläuft, am oberen Ende eine Einwurföffnung aufweist und am unteren Ende eine Entnahmeöffnung aufweist, welche mit Abdeckplatten verschlossen werden können.

2. Schacht nach Anspruch 2, **dadurch gekennzeichnet, dass**, insofern der Schacht nicht an eine Seitenwand des Hochbeetes angrenzt, er durch einen waagerecht verlaufenden Verbindungsschacht mit der Seitenwand des Hochbeetes verbunden ist.

3. Schacht nach Anspruch 2 oder 3, **dadurch gekennzeichnet, dass** der Kompostschacht am unteren Ende einen größeren Querschnitt als an der Einwurföffnung aufweist.

4. Hochbeet aus Eckprofilen und selbstragenden Wandplatten, wobei seitliche Öffnungen zum Einsetzen von Pflanzen und Samen die effektive Anbaufläche vergrößern, **dadurch gekennzeichnet, dass**
(i) ein oder mehrere Kompostschächte innerhalb des Hochbeetes eingebaut sind;
(ii) das Hochbeet auf einer mittels Rollen beweglichen Grundplatte oder auf einem mittels Rollen beweglichen Rahmen aufgebaut ist; und/oder
(iii) im unteren Bereich des Hochbeetes eine wasserdichte Wanne eingebaut ist.

5. Hochbeet nach Anspruch 4, **gekennzeichnet durch** wenigstens einen Kompostschacht mit den Merkmalen der Ansprüche 1 bis 3.

6. Hochbeet nach Anspruch 4 oder 5, **dadurch gekennzeichnet, dass** das Hochbeet in einer wasserdichten Wanne, die eine größere Grundfläche als das Hochbeet selbst besitzt, aufgestellt ist.

7. Hochbeet nach Anspruch 6, **dadurch gekennzeichnet, dass** die wasserdichte Wanne als Wasserbecken (8) ausgestaltet ist.
